# EUROPEAN PATENT SPECIFICATION

(11) **EP 2 763 555 B1**
(45) Date of publication and mention of the grant of the patent: **01.08.2018**
(21) Application number: 12837969.0
(22) Date of filing: 05.10.2012
(51) Int. Cl.: A23L 3/3562, A23B 4/10, A23B 7/05, A23B 7/16

(54) **COMPOSITION AND METHODS FOR IMPROVING ORGANOLEPTIC PROPERTIES OF FOOD PRODUCTS**
ZUSAMMENSETZUNG UND VERFAHREN ZUR VERBESSERUNG DER ORGANOLEPTISCHEN EIGENSCHAFTEN VON NAHRUNGSMITTELN
COMPOSITION ET PROCÉDÉS POUR AMÉLIORER LES PROPRIÉTÉS ORGANOLEPTIQUES DE PRODUITS ALIMENTAIRES

(30) Priority: 07.10.2011 US 201161544873 P
(43) Date of publication of application: 13.08.2014
(73) Proprietor: Fruitsymbiose Inc., St Nicolas, QC G7A 4X6 (CA)
(72) Inventor: GIRARD, Geneviève, Québec, Québec G1S 1S8 (CA)
(74) Representative: Jouanneau, Lionel
(86) International application number: PCT/CA2012/000930
(87) International publication number: WO 2013/049928

(56) References cited:
- WO-A1-99/07230
- WO-A1-2011/123949
- CN-A- 101 991 178
- ES-A1- 2 138 559
- ES-A1- 2 138 559
- US-A- 5 939 117
- US-A- 6 068 867
- ROJAS-GRAU ET AL: "Alginate and gellan-based edible coatings as carriers of antibrowning agents applied on fresh-cut Fuji apples", FOOD HYDROCOLLOIDS, ELSEVIER BV, NL, vol. 21, no. 1, 1 January 2007 (2007-01-01), pages 118-127, XP005664095, ISSN: 0268-005X, DOI: 10.1016/J.FOODHYD.2006.03.001

## Description

### RELATED APPLICATIONS

This application claims priority of US Provisional Patent Application No. 61/544,873, filed on October 07, 2011, and entitled "Composition and methods for improving organoleptic properties of food products".

### TECHNICAL FIELD

The present subject matter relates to a method for improving organoleptic properties of food products, and more specifically the organoleptic properties of fruits and vegetables that are subjected to a thermal treatment such as cooking or freezing and to said food products.

### BACKGROUND

The use of edible coatings is a known technique to increase shelf-life of fresh food products such as fruits and vegetables. Edible coatings create a physical barrier between the fruit or vegetable and the surrounding environment, and reduce ripening reactions such as color and aroma changes, desiccation and degradation of the product. Edible coatings are thus effective in creating a micro-environment for each individual fruit, vegetable or part thereof, thereby retaining humidity and reducing respiration and oxidation and extending shelf life of the products.

Edible coatings known in the art include polysaccharide-, protein- and lipid-based edible coatings. Protein-based edible coatings typically include whey protein, soy protein, gluten, corn protein and/or sodium caseinate. While being efficient, the use of protein-based coating may be limited by current concerns with food allergies since many of the protein ingredients trigger an allergic response. Further, vegetarians and vegans may tend to avoid products coated with protein-based coating because they are derived from an animal source.

Lipid ingredients used for the production of edible coatings include shellac, beeswax, candelilla wax, carnauda wax and fatty acids. Again, some of the lipid-based coatings are from animal sources and tend to be avoided by vegetarians and vegans, which makes them unsuitable for coating products that are, at least partially, destined to this market segment.

Polysaccharides from plant origin have thus been studied for their jellification capacities. The polysaccharides most commonly used are cellulose derivatives, alginate, carrageenan, chitosan, pectin, starch derivates and other gums. Sodium alginate and carrageenan are both derived from seaweed whereas gellan is produced by a bacteria, *Sphingomonas elodea.*

While polysaccharide-based coatings avoid some of the drawbacks associated with protein- and/or lipid-based coatings, sodium alginate, carrageenan, gellan and other polysaccharide-based coating require a cross-linking agent to jellify. Cross-linking agents typically contain monovalent, divalent or trivalent cations and the studies have reported the use CaCl₂ or KCl for this purpose. However, these calcium and potassium salts tend to create turbid solutions when dissolved in water or provide a bitter taste to the coated fresh product, which is undesirable in many instances.

More recently, an edible coating was shown to alleviate some of the drawbacks associated with the coating of the prior art. The coating comprises sodium alginate cross-linked with calcium ascorbate and is described in International Patent Application No. PCT/CA2011/000392 (WO2011/123949A1), incorporated herein by reference. This edible coating serves as a mean to preserve the inherent humidity of fresh fruits and vegetables, as well as to reduce respiration and oxidation, and may also serve as a vehicle in which functional ingredients can be added such as natural essences, prebiotics, probiotics, immune system enhancers, oils, functional plant extracts, and the like. Thus, the edible coating contributes to preserve the integrity, safety and organoleptic properties of fresh fruits and vegetables throughout the supply chain as well creating a value-added consumer product.

Even if edible coatings contribute to extend the shelf-life of fresh food products, fruits and vegetables inevitably start deteriorating at some point and therefore, they cannot be preserved through the years. To ensure access to fruit and vegetable over the seasons, it is therefore necessary to make use of conservation techniques such as freezing or canning. The canning process is known to significantly affect the organoleptic properties of fruits and vegetables because of the heat treatment such as pasteurization or cooking, or because the product is immerged in a liquid for an extended period of time, which tends to soften the product and make its organoleptic characteristics less appealing. Similarly, the cooking of fresh food products which is required to obtain puree, sauces and the like, is necessary in many industrial applications and significantly affects their organoleptic properties, which makes them less appealing to customers. On the other hand, freezing and unfreezing fresh fruits and vegetables is generally associated with waterloss, which in turn makes their organoleptic less appealing.

US6068867A relates to a method for preserving food products in particular for improving their shell-life, by applying a coating of said product, said coating comprising a polysaccharide and a cross-linking agent.

WO99/07230A1 discloses methods for preserving fresh fruits by coating said fruits with a preservative solution comprising water, calcium ions and ascorbate ions. ES2138559A1 discloses an edible coating for fish roe in order to preserve the membrane of the eggs during handling, freezing or cooking, said coating comprising sodium alginate and calcium chloride.

Therefore, it would be beneficial to be provided with a method for preserving the organoleptic properties, for instance texture and moisture content, of food products submitted to a thermal treatment such as cooking or freezing.

### BRIEF SUMMARY

There is provided a method for increasing resistance of a food product subjected to a thermal treatment, cooking or freezing, the method comprises:
- coating said food product with a polysaccharide to substantially cover said surface of said food product;
- cross-linking said polysaccharide substantially covering the surface of the food product with a cross-linking agent solution;
- subjecting the coated food product to cooking or freezing.

According to the invention, the polysaccharide solution includes at least one polysaccharide selected from the group consisting of carrageenan, gellan, alginate, pectin, cellulose derivatives and starch derivatives.

According to the invention, the cross-linking agent solution comprises between 0.5% (w/w) and 50% (w/w) calcium ascorbate.

According to the invention, the method increase resistance of a food product, said resistance being at least one of conservation of the cell's physical structure, conservation of the physical intergrity, conservation of the firmness and/or conservation of the appearance of the food product.

According to one aspect, the polysaccharide solution is sodium alginate. In another aspect, the sodium alginate is in the form of a solution comprising between 0.1% (w/w) and 10% (w/w) sodium alginate, and preferably between about 0.4% (w/w) and 6% (w/w) sodium alginate and more preferably between 0.7% and 4.5% sodium alginate.

In a further aspect, the pectin is pectin LM. In one aspect, pectin LM is in the form of a solution comprising between 2% (w/w) to 15% (w/w) pectin LM, and more preferably between 3% (w/w) to 10% (w/w) pectin LM.

In yet a further aspect, the cross-linking agent solution preferably comprises between 1% (w/w) and 35% (w/w) calcium ascorbate and even more preferably between 5% (w/w) and 25% (w/w) calcium ascorbate
The invention also relates to a cooked or frozen coated food product comprising a coated food product comprising an edible cross-linked polysaccharide layer at the surface of said food product,
wherein said coated food product consists of a thermal-treated food product which has been subjected to cooking or freezing after coating;
wherein said food product is selected from the group consisting of fruits, vegetables and meat; and
wherein said cross-linked polysaccharide layer consists of a polysaccharide solution comprising at least one polysaccharide selected from the group consisting of carrageenan, gellan, alginate, pectin, cellulose derivatives and starch derivatives, said polysaccharide solution being cross-linked with a water soluble cross-linking agent solution comprising at least 0.5% to 50% (w/w) calcium ascorbate

In a further aspect, the coated food product further comprises a food additive on the surface of the food product. Such food additive may be an element selected from the group consisting of an antimicrobial agent, an antioxidant agent and a nutraceutical agent. In one aspect, the antimicrobial agent is vanillin. In another aspect, the antioxidant agent includes at least one of citric acid and ascorbic acid. In yet a further aspect, the nutraceutical agent includes at least one probiotic, where the probiotic is preferably selected from the group consisting of *Lactobacillus acidophilus, Lactobacillus casei* , *Bifidobacterium lactic* Bb12 and Wellmune WGP®.

According to another aspect, the food product is selected from the group consisting of a fruit, a vegetable, a meat product and a fish product.

According to another embodiment, the coating of the food product with the cross-linking agent solution or the polysaccharide solution is carried out by dipping the food product in the cross-linking agent solution or the polysaccharide solution or spraying the same on the food product.
an organoleptic property is selected from the group consisting of physical integrity, visual aspect, odor, taste, texture, moisture content, water loss properties and firmness.

According to a further aspect, the cooking treatment is selected from the group consisting of pasteurization, flask cooking, microwave cooking, stove cooking, frying, appertisation, water cooking and oven cooking.

According to one aspect, the food product further comprises a food additive. In one aspect, the food additive is applied on the surface of the food product prior to coating, is incorporated to the edible coating, or applied on a surface of the edible coating once the food product is coated.

According to another aspect, the food additive is selected from the group consisting of granules of at least one dried fruit and spices, where the at least one dried fruit is preferably selected from the group consisting of a dried apple, a dried strawberry and a dried raspberry.

### BRIEF DESCRIPTION OF THE DRAWINGS

In order that the invention may be readily understood, embodiments of the invention are illustrated by way of example in the accompanying drawings.
FIGS. 1A and 1B are photographs of Cortland apple pieces stove fried in butter at high temperature for 5 minutes: (A) control, (B) 1.2% sodium alginate coating, dried.
FIGS. 2A and 2B are photographs of McIntosh apple pieces stove fried in butter at high temperature for 5minutes: (A) control, (B) 1.2% sodium alginate coating, dried.
FIGS. 3A and 3B are photographs of Cortland apple pieces stove caramelized in sweet and acid solution high temperature 10 minutes: (A) control, (B) 1.2% sodium alginate coating, dried.
FIGS. 4A and 4B are photographs of McIntosh apple pieces stove caramelized in sweet and acid solution at high temperature for 10 minutes: (A) control, (B) 1.2% sodium alginate coating, dried.
FIGS. 5A and 5B are photographs of Cortland apple pieces oven cooked for 1 hour at 350°C in water sweet and acid solution (corn syrup, lemon and water): (A) control, (B) 1.2% sodium alginate coating, dried..
FIGS. 6A and 6B are photographs of McIntosh apple pieces oven cooked for1 hour at 350°C in water sweet and acid solution (corn syrup, lemon and water): (A) control, (B) 1.2% sodium alginate coating, dried.
FIGS. 7A to 7D are photographs showing reduction of water loss properties: (A) Cortland with 1.2% sodium alginate coating, (B) Cortland without edible coating, (C) McIntosh with 1.2% sodium alginate coating, (D) McIntosh without edible coating.
FIG. 8 is a graph showing water loss properties of the edible coating.
FIGS. 9A to 9D are photographs showing water loss properties of the edible coating on vegetables: (A) vegetable blend control cooked (B) vegetable blend 1,2% undried edible coating (C) vegetable blend dry 1,2% edible coating (D) vegetable blend dipped 2 minutes in calcium ascorbate.
FIG. 10 is an enlarged view of FIG. 9A.
FIG. 11 is an enlarged view of FIG. 9B.
FIG. 12 is an enlarged view of FIG. 9C.
FIG. 13 is an enlarged view of FIG. 9D.
FIGS. 14A to 14D are photographs showing the organoleptic properties of raspberries coated with a mixture of sodium alginate powder and a 1.2% sodium alginate edible coating: (A) control sample, (B) 0.5% sample, (C) 2.5% sample and (D) 5% sample.
FIG. 16: Retention mass rate of raspberries cooked in apple sauce.

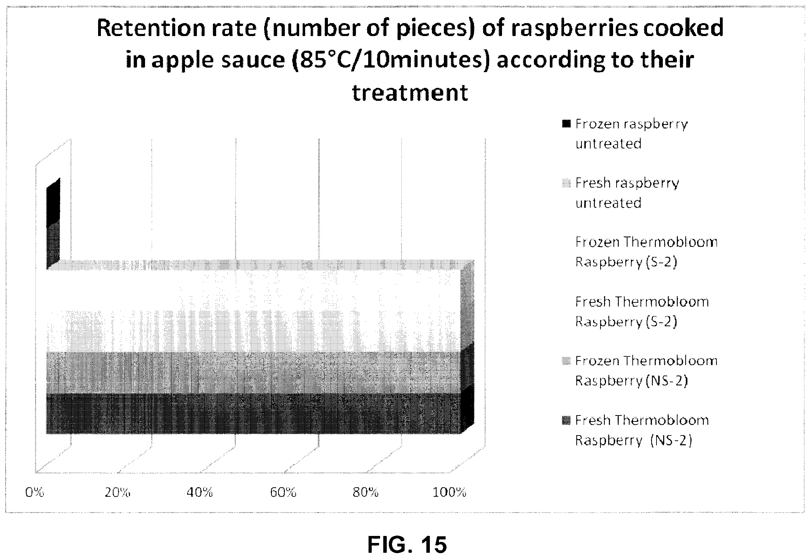

FIG. 15: Retention rate of raspberries cooked in apple sauce.

Further details of the invention and its advantages will be apparent from the detailed description included below.

### DETAILED DESCRIPTION

It has been surprisingly found that the method of the present invention provides thermoresistance properties that can be apply to many food application. The fresh cut fruits and/or vegetables treated in accordance with the method of the invention offer a better resistance to refrigeration treatment and/or prolonged heat treatment as well as better conservation of the cell's physical structure, of the firmness and of the appearance.

The term "thermal treatment" is intended to mean any treatment that causes a product or a position thereof to depart from room temperature. As such, thermal treatment would include "refrigeration treatment" as well as "heat treatment": The term "refrigeration treatment as intended herein shall receive a broad interpretation and includes any treatment or step which results in lowering the temperature of a product or a portion thereof below room temperature, regardless of the period of time during which the temperature is lowered. Accordingly, refrigeration treatment would include, without limitation, freezing.

The term "heat treatment" as intended herein shall receive a broad interpretation and includes any treatment or step carried out which results in increasing the temperature of a product or a portion thereof above room temperature, regardless of the period of time during which the temperature is increased. Accordingly, "heat treatment" would include, without imitation, pasteurization, flash cooking, microwave cooking, stove cooking, frying, appertisation. Further, "heat treatment" includes cooking of the food product, whether cooking is water cooking, frying, oven cooking or any other type of cooking. The term "heat treatment" includes any type of cooking, whether the food product is cooked alone or as a part of a mixture of ingredients, for instance as part of a soup, cake mixture, sauce, and the like. Further, "heat treatment" would include drying treatment and any other treatment that cause the food product to denaturate from it initial form, even partially.

Similarly, the term "organoleptic properties" shall be interpreted broadly and includes any property of the food product which is appealing to a sense, whether it is the physical integrity, visual aspect, odor, taste, texture, moisture content, water loss properties and firmness and the like. In this context, the person skilled in the art will appreciate that "preserving the organoleptic properties of a food product" and similar terms are intended to means preserving at least one of the organoleptic properties of a product. This term also means reducing, even partially, the loss of at least one organoleptic property as compared to a food product that is subjected to the same heat or thermal treatment but that is not coated with an edible coating.

Exemplary food products being treated in accordance with the invention include, but are not limited to, whole and fresh cut fruits such as strawberries, grapes, blueberries blackberries papayas, apples, kiwis, cantaloupes, pineapples, melon dews, watermelons, and vegetables, such as peppers, tomatoes and the like. A person skilled in the art will appreciate that the edible coatings may find use with any other product intended for animal or human consumption. The method may also find use on frozen product such as frozen vegetables, frozen fruits, frozen meat products and frozen fish products as well as dehydrated food products such as raisin, dried cranberries and the like.

The polysaccharide comprises at least one polysaccharide selected from the group consisting of carrageenan, gellan, sodium alginate, and pectin. A mixture of polysaccharides may also be used.

In one example, the polysaccharide comprises sodium alginate, preferably in the form of a sodium alginate solution. This polysaccharide is used since the experiments conducted showed that sodium alginate is capable of forming firm or very firm gels. The polysaccharide solution typically comprises between 0.1% (w/w) and 10% (w/w) sodium alginate, and preferably, between 0.4% (w/w) and 6% (w/w) sodium alginate and more preferably between 0.7% and 4.5% sodium alginate. A person skilled in the art will appreciate that the concentration of polysaccharide used in solution may be selected based on the capacity to uniformly and rapidly coat the surface of the products, without compromising the ability to form a gel having a proper firmness.

Alternatively, the polysaccharide may comprise pectin, an example of which is pectin LM, preferably in the form of a pectin LM solution. A person skilled in the art will appreciate that the pectin concentration in the solution used for the coating process may vary. Typically, the polysaccharide solution comprises between about 2% (w/w) to about 15% (w/w) pectin LM, and more typically between about 3% (w/w) to about 10% (w/w) pectin LM.

For cross-linking the polysaccharide used to obtain a gel, prior to subjecting the food product to the thermal treatment, the cross-linking agent solution is provided. The cross-linking agent solution comprises between 0.5% (w/w) and 50%(w/w) calcium ascorbate, and more preferably between 1% (w/w) and 35% (w/w) calcium ascorbate and even more preferably between 5% (w/w) and 25% (w/w) calcium ascorbate. Calcium ascorbate is tends to avoid the bitter taste generally associated with calcium and potassium sources known in the art (CaCl₂ or KCl). Further, ascorbate is an ion of ascorbic acid (*i.e.* Vitamin C) and thus, the use of this cross-linking agent confers vitamin properties to the edible coating. Alternatively, CaCl₂ or KCl and other salts could also be used as cross-linking agents, for instance where the food product is to be used in preparations where the taste of the cross-linking agent can be altered or dissimulated by other ingredients or by the heat treatment.

In the present specification, the term "off-flavor" is used to describe a flavor (and/or an odor) generally associated with the degradation of a perishable food product. Accordingly, the term "off-flavor" excludes a flavor conferred to the edible coating by the presence of an additional ingredient such as, for example, a probiotic.

In one embodiment, a food additive comprises an element selected from the group consisting of an antimicrobial agent, an antioxidant agent and a nutraceutical agent. The addition of such elements is aimed at providing additional properties to the coating.

For example, the use of an antimicrobial agent may be beneficial. In one example, the use of vanillin as microbial agent is desirable since vanillin also masks the taste associated with some polysaccharides or other elements may be added to the edible coating (*e.g*. probiotics), and also enhance sweetness of products such as fruits. In this example, a concentration of 0.1% of vanilla essence is typical. A person skilled in the art will appreciate that any other antimicrobial agent suitable for consumption may be used instead of, or in combination with, vanillin. For example, one may opt for using essential oils, which are also known for their antimicrobial activities. The antioxidant used is typically citric acid (typically at a concentration of 1%), or ascorbic acid (typically at a concentration of 1%) or a combination thereof. The nutraceutical agent typically comprises at least one probiotic, examples of which include *Lactobacillus acidophilus, Lactobacillus casei, Bifidobacterium lactic* Bb12 and Wellmune WGP®. A person skilled in the art will appreciate that many other functional ingredients can be added to the polysaccharide coating described herein and that they are not limited to those described herein.

In one embodiment, the antimicrobial, antioxidant and/or a nutraceutical agent is embodied in the polysaccharide solution prior to cross-linking thereof.

It is also described alternate embodiments of the method of the invention:
- the method comprises: (1) coating the food product with a cross-linking agent solution to substantially cover the surface of the food product; (2) coating the food product with a polysaccharide to substantially cover the surface of the food product; and (3) allowing jellification of the polysaccharide to obtain a polysaccharide layer covering the surface of the food product;- the method comprises: (1) coating the food product with a cross-linking agent solution to substantially cover the surface of the food product; (2) coating the food product with a polysaccharide to substantially cover the surface of the food product; (3) allowing jellification of a portion of the polysaccharide substantially covering the surface of the food product; (4) coating the food product again with the cross-linking agent solution to substantially cover the surface of the food product; and (5) allowing jellification of another portion of the polysaccharide substantially covering the surface of the food product to obtain a polysaccharide layer substantially covering the surface of the food product,
- coating the food product with the polysaccharide is carried out by dipping the food product in a polysaccharide powder or by sprinkling the polysaccharide powder on the food product. Any other suitable method for coating a food product with a powder may be used. In one embodiment, the polysaccharide powder comprises 100% polysaccharide. In another embodiment, to adjust the amount of polysaccharide on the food product while ensuring a proper distribution, the polysaccharide powder may comprise a filler, such as, for instance, sucrose. Any other suitable filler may alternatively be used. Further, the person skilled in the art will appreciate that the proportion or ratio of polysaccharide: filler may vary according to the consistency desired for the coating. In one example, a mixture comprising a polysaccharide may comprise between about 0,1% and 50% sodium alginate and between about 50% and 99.9% sucrose, and preferably between about 0.25% and 20% sodium alginate and about 80% to 99.75% sucrose, and more preferably between about 0.5% and about 10% sodium alginate and between about 90% and 99.5% sucrose.

In another aspect, coating the food product is carried out by immersing or dipping the food product in the solution (the polysaccharide solution and/or the cross-linking agent solution) or by spraying the solution onto the food product. A person skilled in the art will appreciate that other techniques for coating a food product may exist and that any suitable method for coating a product with a solution would fit the purpose of the methods described herein.

The person skilled in the art will appreciate that alternatives are also possible. For instance, one may opt for coating the food product with a polysaccharide powder, and then with a polysaccharide solution, after which the polysaccharide is cross-linked by coating the food product with the cross-linking agent solution. Alternatively, one may opt for coating the food product with a polysaccharide solution, then with a polysaccharide powder, after which the polysaccharide is cross-linked by coating the food product with the cross-linking agent solution.

The methods described herein are typically carried out as described in the Examples below. A person skilled in the art will however appreciate that multiple ways to carry out the method may exist. For example, one may opt for automating all steps of the method.

A person skilled in the art will further appreciate that the immersion or dipping time required for substantially covering the food product with the polysaccharide solution will depend upon the consistency of the solution and the size of the fruit. A person skilled in the art will also appreciate that the immersion time for allowing cross-linking of the polysaccharide solution will be based on the concentration of cross-linking agent in the solutions. For example, an immersion time of about 15-20 seconds in a solution comprising 15% calcium ascorbate would be sufficient to allow proper gel formation while the use of a 0.5% calcium ascorbate solution would require an immersion time of 5 to 8 minutes. Similarly, the spraying time may vary based on the concentration of the polysaccharide and/or cross-linking agent solutions, as well as the desired characteristic of the coating to be obtained.

The methods described herein will be explained in further details by way of the following examples.

### EXAMPLES

### Fruit & Vegetable supply

Fresh and frozen fruits and vegetables were purchased from Allard Fruits & Legumes, a fruits and vegetables importer located in Quebec City, Canada. More specifically, various types of fresh apples, as well as frozen wildberries and frozen cranberries were used.

### Edible coating preparation

Sodium alginate (0.5% to 10% w/w), was separately solubilized in different tanks with tap water at 60°C for 60 minutes. Once solubilized, all solutions were refrigerated at 30°C and were kept at this temperature throughout the coating of the fruits. The sodium alginate used gel under the cross-linked action of divalent cations such as calcium. In this example, calcium ascorbate was preferred over other cross-linking agents for its vitamin C value. Hence, a solution (10% to 80% w/w) of calcium ascorbate was solubilized in tap water and kept at 40°C for the duration of the treatments.

### Fruit and vegetable preparation

Whole fruits and vegetables were soaked in Chinook (peracetic acid) solution 18ppm at 40°C (18 ppm) for 1 minute. When appropriate, the vegetable or the fruit was lightly brushed with a manual hand brush while in the Chinook solution. Upon completion of the washing step, the fruit and vegetables were peeled, cored then cut in different size on a sanitized cutting board.

### Coating

Fruit or vegetable were individually coated in the sodium alginate solution by dipping for 3 to 5 seconds with an automatic conveyor system, or with spray gun. Spray gun gave better result with 3% sodium alginate SA comparatively to 0.75% to 1.2% concentration for automatic coating system. All fruit and vegetables pieces were held on a conveyor belt and excess solution was drained for 10 seconds. Pieces were then individually jellified by immersion in the calcium ascorbate solution for 60 to 120 seconds or by spraying gun and then again held on a conveyor belt to allow excess solution to drain. As best described in the appended tables below, some of the coated fruits were dried while some others were not (herein the "undried" products). When the fruits were dried, the drying step was carried out on a conveyor belt at different ratio of relative humidity/time/air velocity, depending on the facilities.

### Example 1

### Coated fruits and vegetables heat treatment

Fruit or vegetable pieces, whether dried or undried, were subjected to various heat treatments such as water ebullition, ebullition in applesauce at 93.3°C (200°F), microwave cooking, stove cooking, oven cooking or appertisation (121°C 15 minutes in sealed glass jars) for different periods of time. The organoleptic analysis was made when the temperature of the food products had chilled to 20°C, using the following scoring systems for firmness and loss of water:

| **Loss of Water Scoring System for fresh cut fruit submitted to heat treatment** | |
|---|---|
| **Score** | **Loss of water (% of weight)** |
| 5 | No exudation |
| 4 | Loss of 0-5% water |
| 3 | Loss of 5-10% water |
| 2 | Loss of 10%-25% water |
| 1 | Loss of 50% water and more |

| **Firmness Scale Scoring System for fresh cut fruit submitted to heat treatment** | |
|---|---|
| **Score** | **Organoleptic characteristics** |
| 5 | Raw texture and crunchy |
| 4 | Slight cooking, firmness |
| 3 | Flabby, Canned type texture |
| 2 | Shelled of the fruit |
| 1 | Complete loss of structure, mash |

### Results

The firmness and the loss of water were evaluated for different products and under various conditions. The organoleptic properties of the fruit products under various coating conditions are summarized below for fresh apples (Tables 1 and 2), frozen wildberries (Table 3) and frozen cranberries (Table 4).

**Table 1: Organoleptic characteristics of fresh cut apple 1/4' pieces exposed to different heat treatment**

| Heat treatment | Treatment | Storage days | Loss of water (% weight) | Firmness Score | General Acceptability |
|---|---|---|---|---|---|
| 2 minutes in applesauce at 93.3°C (200°F) | Untreated | 1 | - | 3 | Acceptable |
| | Calcium ascorbate solution dipped | 1 | - | 3 | Acceptable |
| | Edible coating 1,2% | 1 | - | 4 | Acceptable |
| | Untreated | 11 | - | 2 | Unacceptable |
| | Calcium ascorbate solution dipped | 11 | - | 2 | Acceptable |
| | Edible coating 1,2% | 11 | - | 4 | Acceptable |
| 5 minutes in applesauce at 93.3°C (200°F) | Untreated | 2 | - | 2 | Unacceptable |
| | Calcium ascorbate solution dipped | 2 | - | 2 | Unacceptable |
| | Edible coating 0,75% (not dried) | 2 | - | 4 | Acceptable |
| | Edible coating 0,9% (not dried) | 2 | - | 4 | Acceptable |
| | Edible coating 1,2% % (not dried) | 2 | - | 4 | Acceptable |
| | Untreated | 5 | - | 1 | Unacceptable |
| | Calcium ascorbate solution dipped | 5 | - | 2 | Unacceptable |
| | Edible coating 0,75% % (not dried) | 5 | - | 4 | Acceptable |
| | Edible coating 0,9% % (not dried) | 5 | - | 4 | Acceptable |
| | Edible coating 1,2% % (not dried) | 5 | - | 4 | Acceptable |
| 10 minutes in applesauce at 93.3°C (200°F) | Untreated | 1 | - | 2 | Unacceptable |
| | Calcium ascorbate solution dipped | 1 | - | 2 | Unacceptable |
| | Edible coating 1,2% | 1 | - | 4 | Acceptable |
| | Untreated | 11 | - | 2 | Unacceptable |
| | Calcium ascorbate solution dipped | 11 | - | 2 | Unacceptable |
| | Edible coating 1,2% | 11 | - | 4 | Acceptable |

**Table 2: Loss of water of fresh cut apple 1/4' pieces exposed to different heat treatment**

| **Heat treatment** | **Treatment** | **Storage days** | **Loss of water (% weight)** | **Firmness Score** | **General Acceptability** |
|---|---|---|---|---|---|
| Microwave-1 minutes | Untreated | - | 66,5% | 2 | Unacceptable : burned |
| | Calcium ascorbate solution dipped | - | 60,0% | 3 | Unacceptable : burned |
| | Edible coating 3% gun sprayed (not dried) | - | 53,4% | 4 | Acceptable |
| | Edible coating 3% gun sprayed (dried) | - | 54,0% | 4 | Acceptable |
| | Edible coating 1,2% dipping (not dried) | - | 37,5% | 4 | Acceptable |
| | Edible coating 1,2% dipping (dried) | - | 5% | 4 | Acceptable |
| Boiling Water-2 minutes 93.3°C (200°F) | Untreated | - | 20% | 3 | Unacceptable firmness |
| | Calcium ascorbate solution dipped | - | 7% | 4 | Unacceptable : Bad flavour |
| | Edible coating 0,75% (not dried) | - | 8% | 4 | Acceptable |
| | Edible coating 0,75% (dried) | - | 2% | 4 | Acceptable |
| | Edible coating 0,9% (not dried) | - | 10% | 4 | Acceptable |
| | Edible coating 0,9% (dried) | - | 4% | 4 | Acceptable |
| | Edible coating 1,2% (not dried) | - | 11% | 4 | Acceptable |
| | Edible coating 1,2% (dried) | - | 2% | 4 | Acceptable |

**Table 3: Organoleptic characteristics of frozen wildberries exposed to different heat treatment**

| **Heat treatment** | **Treatment** | **Storag e days** | **Loss of water (% weight)** | **Firmness Score** | **General Acceptability** |
|---|---|---|---|---|---|
| | Untreated | 1 | - | 1 | Unacceptable |
| | Calcium ascorbate solution dipped | 1 | - | 1 | Unacceptable |
| 93.3°C (200°F) in applesauce -10 minutes | Edible coating 1,2% | 1 | - | 3 | Acceptable |
| | Untreated | 11 | - | 1 | Unacceptable |
| | Calcium ascorbate solution dipped | 11 | - | 1 | Unacceptable |
| | Edible coating 1,2% | 11 | - | 3 | Acceptable |
| 93.3°C (200°F) in applesauce -2 minutes | Untreated | 1 | - | 2 | Unacceptable |
| | Calcium ascorbate solution dipped | 1 | - | 2 | Unacceptable |
| | Edible coating 1,2% | 1 | - | 4 | Acceptable |
| | Untreated | 11 | - | 1 | Unacceptable |
| | Calcium ascorbate solution dipped | 11 | - | 1 | Unacceptable |
| | Edible coating 1,2% | 11 | - | 4 | Acceptable |

**Table 4: Organoleptic characteristics of frozen cranberries exposed to different heat treatment**

| **Heat treatment** | **Treatment** | **Storag e days** | **Loss of water (% weight)** | **Firmness Score** | **General Acceptability** |
|---|---|---|---|---|---|
| 93.3°C (200°F) in applesauce - 10 minutes | Untreated | 1 | - | 1 | Unacceptable |
| | Calcium ascorbate solution dipped | 1 | - | 1 | Unacceptable |
| | Edible coating 1,2% | 1 | - | 4 | Acceptable |
| | Untreated | 11 | - | 1 | Unacceptable |
| | Calcium ascorbate solution dipped | 11 | - | 1 | Unacceptable |
| | Edible coating 1,2% | 11 | - | 3 | Acceptable |
| 93.3°C (200°F) in applesauce -2 minutes | Untreated | 1 | - | 3 | Unacceptable |
| | Calcium ascorbate solution dipped | 1 | - | 3 | Unacceptable |
| | Edible coating 1,2% | 1 | - | 5 | Acceptable |
| | Untreated | 11 | - | 2 | Unacceptable |
| | Calcium ascorbate solution dipped | 11 | - | 2 | Unacceptable |
| | Edible coating 1,2% | 11 | - | 5 | Acceptable |

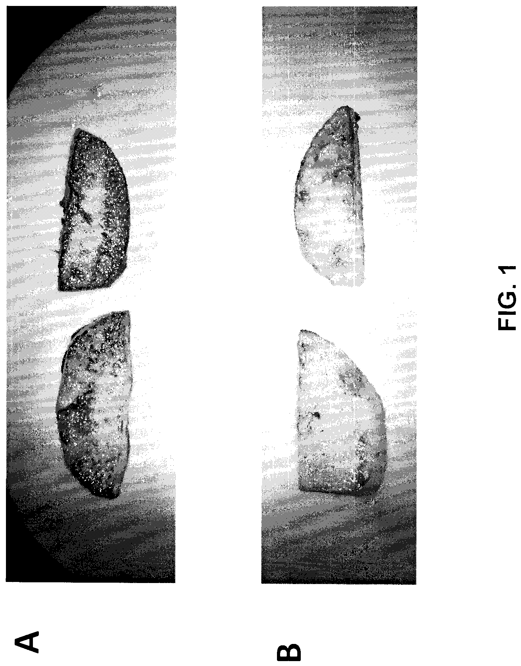

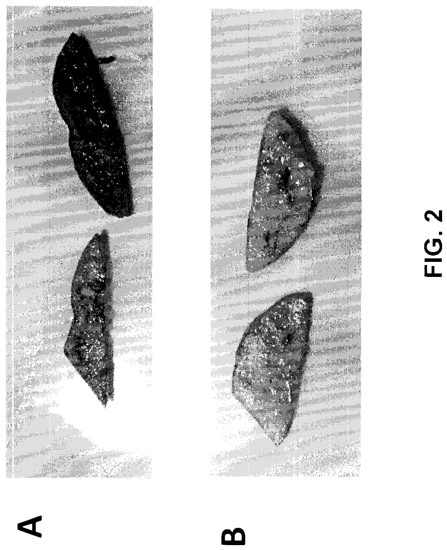

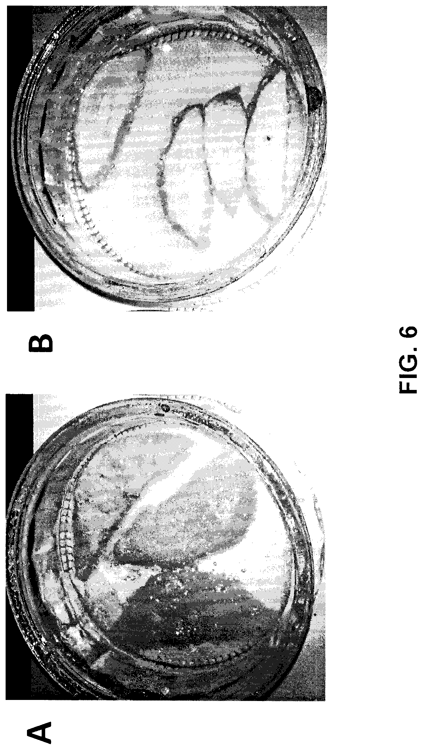

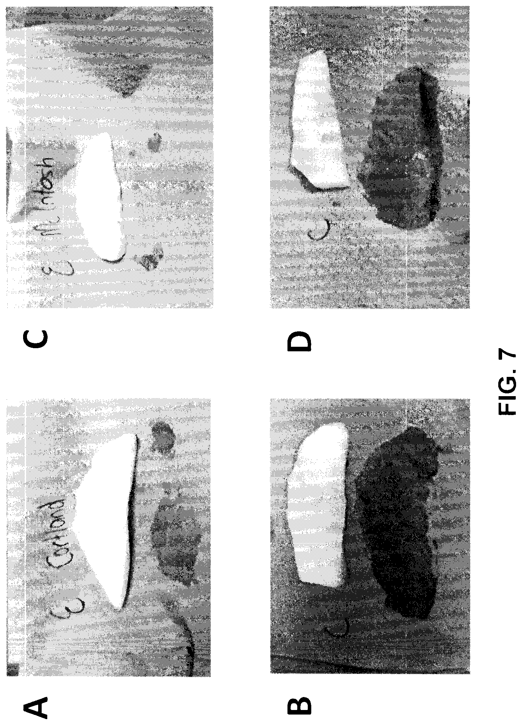

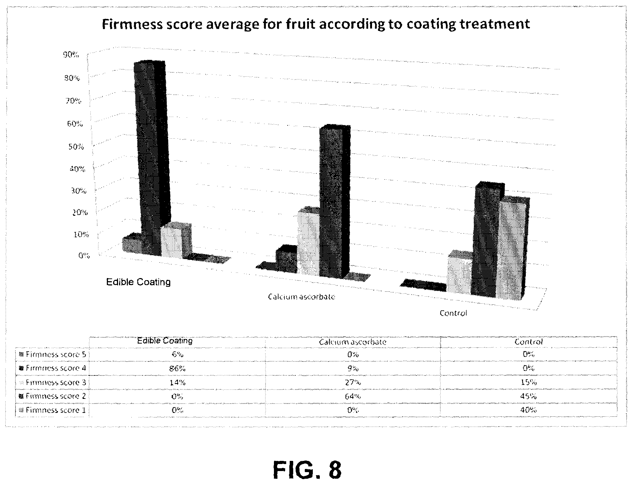

In addition to evaluate the moisture content and the firmness, other organoleptic characteristics such as the appearance and the taste of fruits were evaluated. These characteristics are shown in FIG 1 to 8.

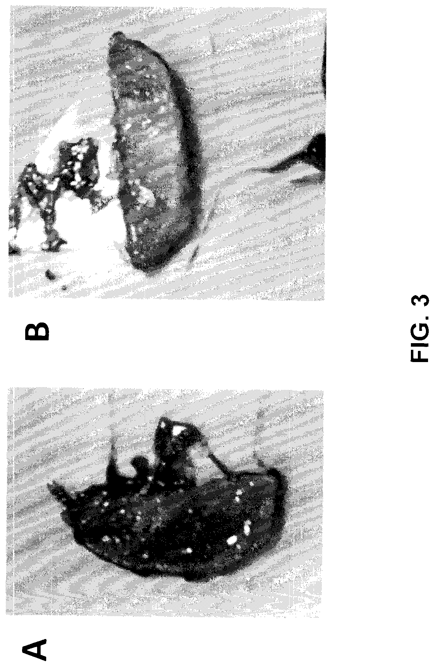

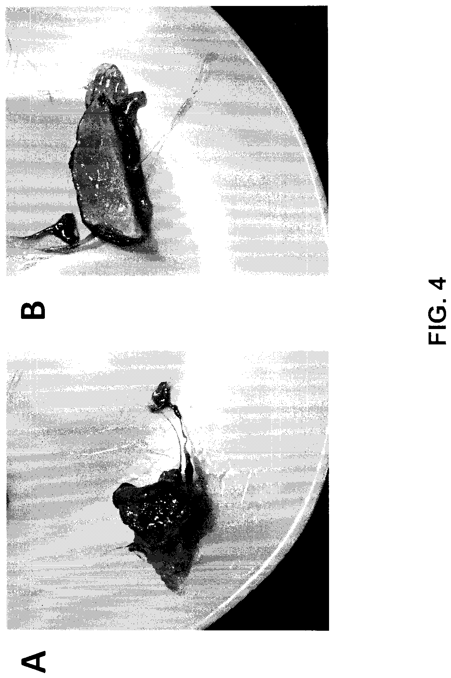

For instance, FIG. 3 clearly shows that Cortland apple pieces coated with edible coating preserved their crunchiness, structure and taste while the control apple pieces were translucent, too soft and overcooked. Similarly, FIG. 4 shows that McIntosh apple pieces coated with the edible coating preserved their crunchiness, and their structure, as well as their authentic taste. On the contrary, the control pieces appear burned, overcooked and devoid of structure.

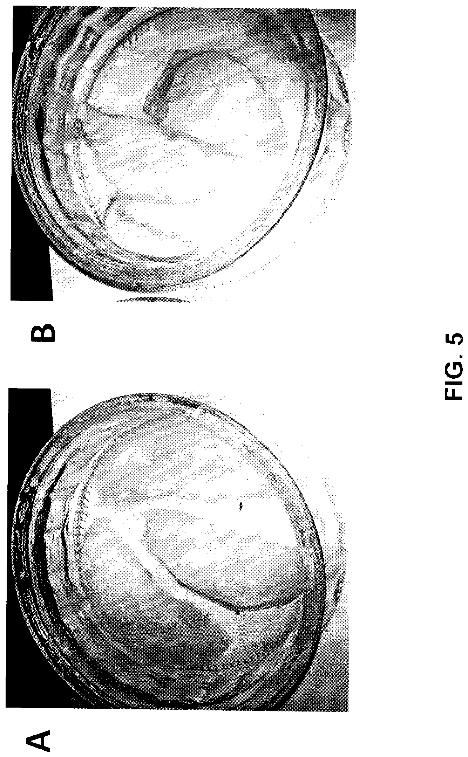

FIG. 5 shows that Cortland apple pieces cooked in oven for one hour at 196.7°C (350°F) preserved their structure when coated but that the control apple is flabby and it lost its color and its structure. Further the edible coating was inaudible at mastication. Similar results were also obtained with McIntosh apple pieces cooked in oven for one hour at 196.7°C (350°F): they preserve their structure, crunchy texture and taste when coated while control apple pieces decreased in size during cooking, were completely flabby and lost their color and structure. Coating was also inaudible at mastication.

These results show that the edible coating on whole and fresh-cut fruit and vegetables provides a significant reduction of waterloss and softening of the tissue. The edible coating has the property to protect the pieces of fresh cut fruit and vegetable from high and low temperature treatment. It results in an improved firmness and crunchy texture and noticeable water retention during heat treatment. Furthermore, the edible coating has the property to preserve the color of the product during the cooking, even in water cooking. Also, edible coating preserves the flavour of the fruits and of the vegetable during cooking.

The results obtained under various conditions also show that water retention is related to thickness of the coating. With a 10% (w/w), not dried edible coating/fruit ratio, the water retention is 95% as compared to 50% water retention for a 3% (w/w), not dried edible coating/fruit ratio. However, a 25% (w/w) edible coating/fruit ratio may lead to a loss of flavour of fruits. On the other hand thermoresistance property did not appear to be related to the thickness of the coating. Properties are observed from 0.1% w/w concentration of alginate in coating.

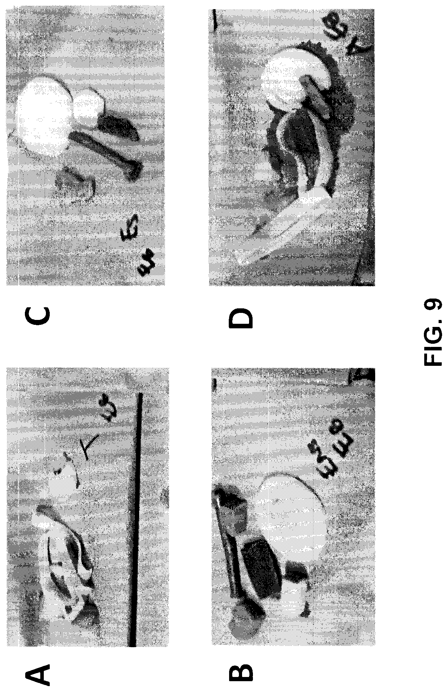

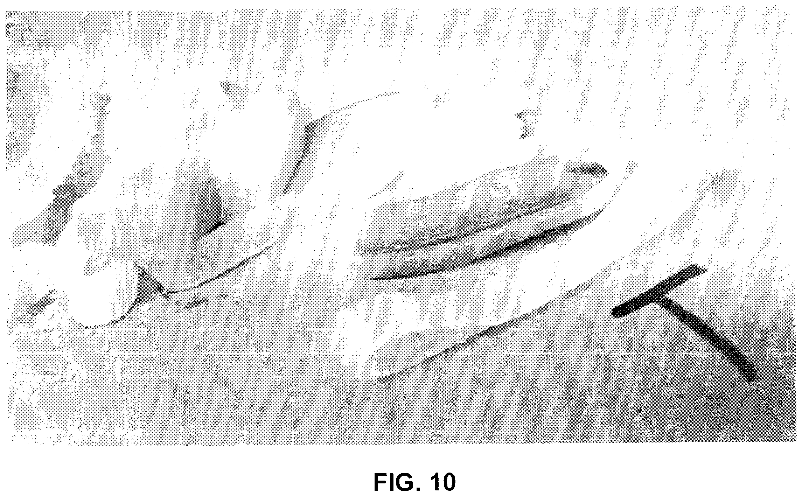

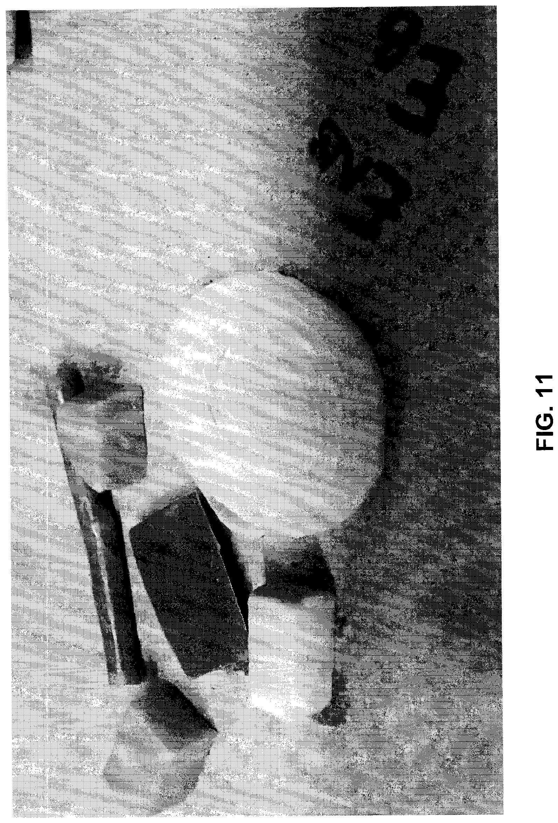

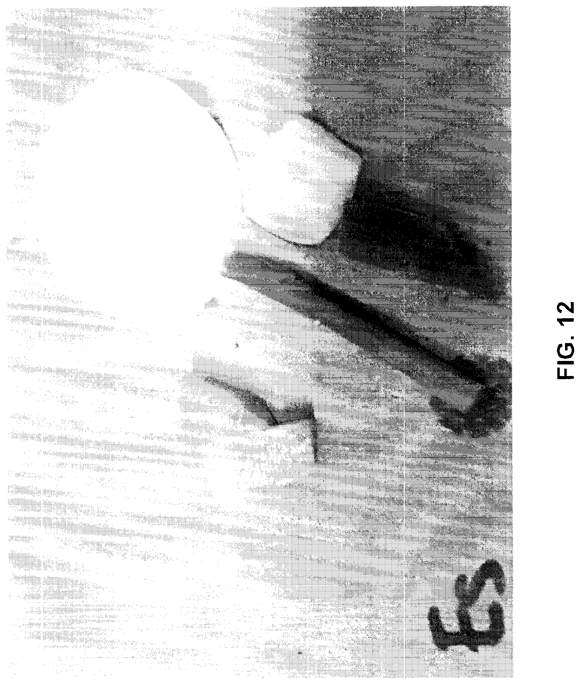

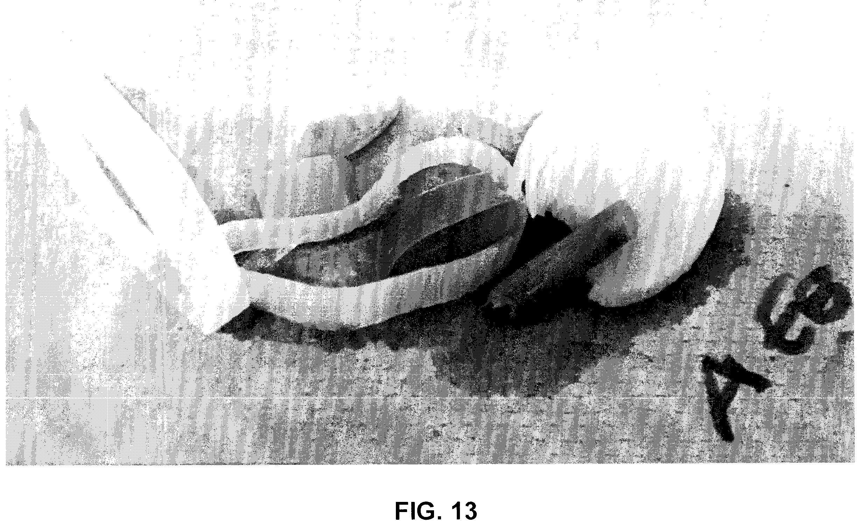

Similar results were obtained with various vegetables. As best shown in FIGS. 9 to 13, vegetable coated with the edible coating preserved a better appearance than control vegetable (uncoated) or vegetables immersed in a calcium ascorbate solution.

The Results obtained indicate that there is great potential to counteract moisture, structure and texture loss, the main parameters associated with quality loss in many fruit and vegetables by application of edible coating on fresh or freeze fruit or vegetable before heated treatment.

### Example 2

### Fresh fruits incorporated in pastries

Fresh raspberries were used in the preparation of Madeleine cakes. In this application, raspberries were coated with different mixtures of a sodium alginate powder prior to be coated with a 1.2% sodium alginate coating as described in Example 1. The mixture of sodium alginate powder and edible coating are summarized in the table below:

| **Sample** | **Mixture of Sodium Alginate Powder** | **Edible Coating** |
|---|---|---|
| Control | None | None |
| 0.5% | 0.5% sodium alginate, 99.5% sucrose | 1.2% sodium alginate |
| 2.5% | 2.5% sodium alginate, 97.5% sucrose | 1.2% sodium alginate |
| 5% | 5% sodium alginate, 95% sucrose | 1.2% sodium alginate |

The coated raspberries were incorporated in a Madeleine preparation. The Madeleine preparation for each sample of fresh raspberries was placed in separate molds and baked at 196.7°C (350°F) for 6 minutes and 223.9°C (435°F). The organoleptic properties were determined for each sample of fresh raspberries.

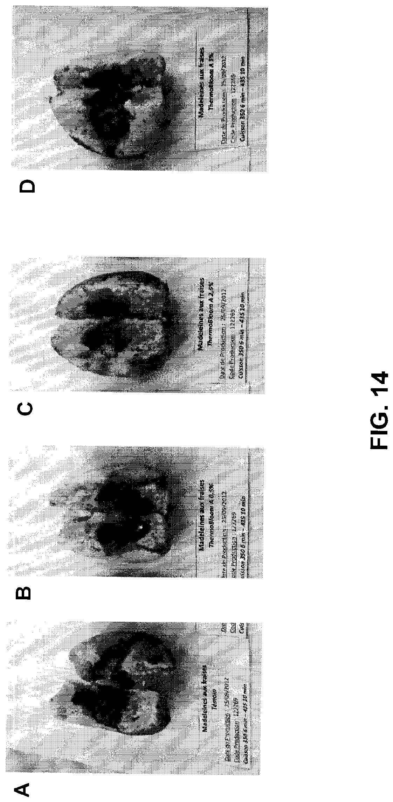

The samples coated with a mixture of sodium alginate powder and a 1.2% sodium alginate edible coating showed marked improvement in the organoleptic properties of the raspeberries, as best shown in FIG. 14. The mixture of powder and the edible coating contributed to prevent exudation, preserve the physical integrity of the fruit and appear to somewhat modulate the cooking of the raspberries by reducing the impact of heat. The samples coated with a mixture of sodium alginate powder and a 1.2% sodium alginate edible coating were more juicy, had a better taste as well as a better feel in mouth as compared to the control sample, for which raspberries entirely lost their cell structure, were mashed and exuded into the dough of the cake.

### Example 3

### Raspberries in apple sauce

Fresh and frozen raspberries were used to assess the capability of a 2% sodium alginate edible coating to preserve the organoleptic properties of fruits in apple sauce. The various samples tested are summarized in the table below:

| **Sample** | **Fresh or frozen raspberries** | **Edible Coating** |
|---|---|---|
| Frozen raspberry untreated | Frozen | None |
| Fresh raspberry untreated | Fresh | None |
| Frozen Thermobloom Raspberry (S-2) | Frozen | 2% sodium alginate (dried) |
| Fresh Thermobloom Raspberry (S-2) | Fresh | 2% sodium alginate (dried) |
| Frozen Thermobloom Raspberry (NS-2) | Frozen | 2% sodium alginate (not dried) |
| Frozen Thermobloom Raspberry (S-2) | Fresh | 2% sodium alginate (not dried) |

The number of raspberries in each sample, as well as the weight of each sample was determined. The samples were then incorporated in apple sauce and cooked at 85°C - 90°C for 10 minutes, with constant manual steering. Each sample was screened on a mesh to collect the raspberries remaining after cooking. The retention rate (*i.e.* the percentage of whole raspberries remaining on the mesh), as well as the retention mass rate (*i.e.* the weight of the product remaining on the mesh compared to the initial weight of the raspberries) were determined for each sample.

As best shown in FIG. 15, all samples for which raspberries were coated with the 2% sodium alginate coating, whether dried or not, frozen or fresh, show a retention rate of 100% while the uncoated samples show a retention rate of 0%.

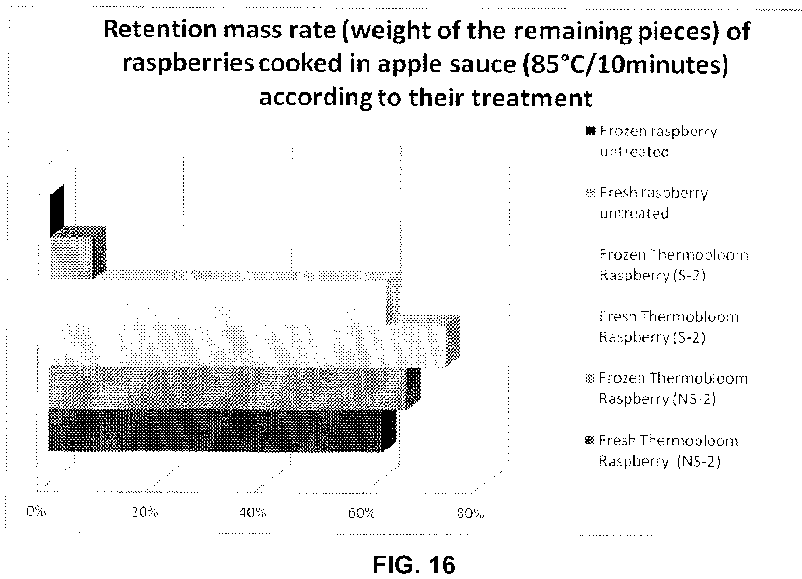

Similarly, FIG. 16 shows a retention mass rate from about 60% to about 70% for all samples for which raspberries were coated with the 2% sodium alginate coating, whether dried or not, frozen or fresh. By comparison, uncoated frozen raspberries show a retention mass rate of 0% while uncoated fresh raspberries show a retention mass rate of about 8%. The retention mass rate observed with uncoated fresh raspberries was attributable to the formation of apple sauce agglomerates remaining on the mesh rather than to the presence of raspberries.

To simulate food shear and damages caused to the fruits during food processing in the industry, the retention mass rate was also determined for raspberries cooked in apple sauce for 5 minutes at 85°C with constant mixing using a food processor. The retention mass rate for fresh and frozen raspberries coated with the 2% sodium alginate coating was about 45% and 35%, respectively, as compared to about 15% for uncoated frozen raspberries.

### Example 4

### Capability of various edible coatings to preserve organoleptic properties during freezing/ unfreezing

To assess the capability of edible coatings to preserve the organoletptic properties of fruits and vegetables submitted to refrigeration, and more specifically freezing, samples of raspberries were coated according to the following protocols:

| **Sample** | **Fresh or frozen raspberries** |
|---|---|
| Control | No coating |
| A | coating with 1.2% sodium alginate solution followed by cross-linking with calcium ascorbate solution |
| B | coating with sodium alginate powder (100%) followed by cross-linking in calcium ascorbate solution |
| C | coating with 1.2% sodium alginate solution, coating with sodium alginate powder, cross-linking in calcium ascorbate solution. |
| D | coating with sodium alginate powder, coating with 1.2% sodium alginate solution, cross-linking in calcium ascorbate solution. |

For each sample, the test was conducted in triplicate. The samples were frozen at -20°C for 5 days. The samples were then unfrozen and waterloss was measured 2 hours and 24 hours after unfreezing and the general aspect of the fruit was assessed. The results are shown in the table below:

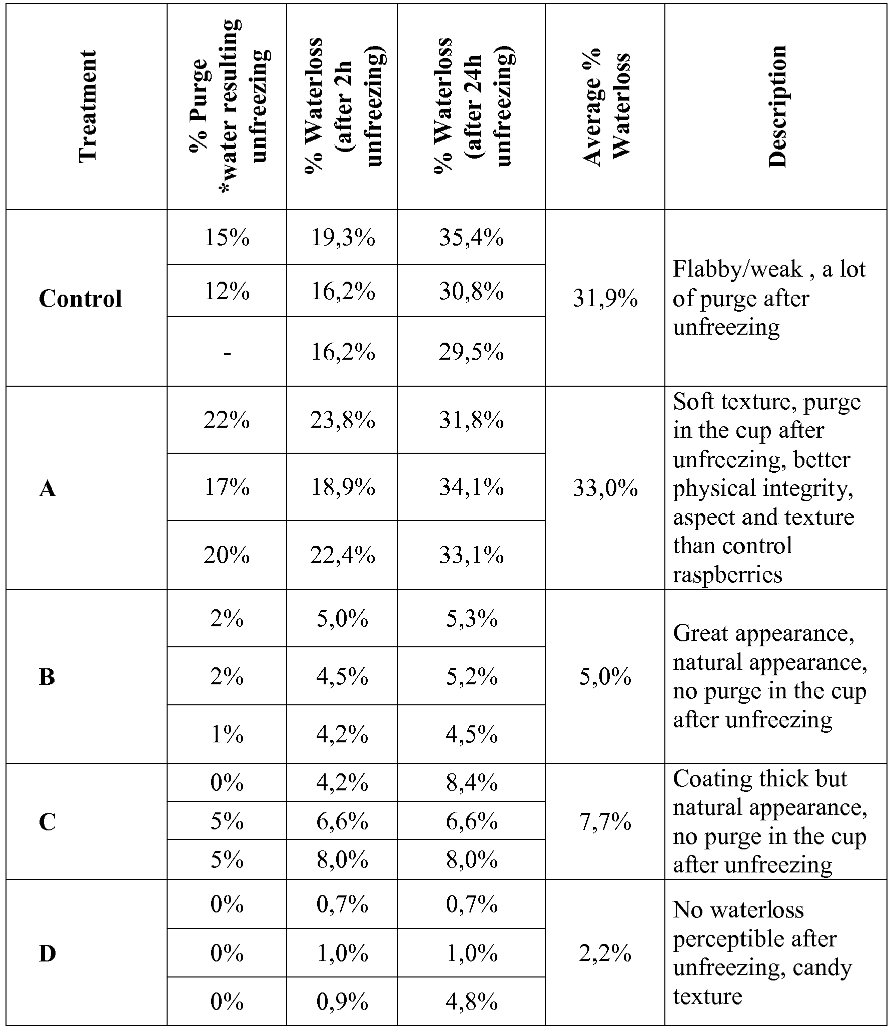

The experiments conducted shows that the all tested coatings were efficient in to preserve the organoleptic properties of raspberries during freezing/unfreezing cycle.

The person skilled in the art will therefore appreciate that the edible coating can find use in food industry that use high and low temperature treatment for preservation such as sauce, puree, canned product, pasteurize product, frozen dinner, frozen fruits, frozen vegetables and the like.

## Claims

1. A method for increasing resistance of a food product subjected to cooking or freezing, the method comprising the steps of:
(a) coating said food product with a polysaccharide solution comprising at least one polysaccharide selected from the group consisting of carrageenan, gellan, alginate, pectin, cellulose derivatives and starch derivatives, to cover the surface of said food product; and
(b) cross-linking said polysaccharide with a cross-linking agent solution comprising between 0.5% to 50% w/w calcium ascorbate, to obtain a cross-linked polysaccharide layer covering said surface of said food product;
(c) subjecting the coated food product to cooking or freezing;
wherein said increased resistance is at least one of a conservation of the cell's physical structure, a conservation of the physical integrity, a conservation of the firmness and/or a conservation of the appearance of the food product.

2. The method according to claim **1**, wherein said cross-linking agent solution comprises between about 1% w/w and about 35% w/w calcium ascorbate.

3. The method according to claim **1,** wherein said cross-linking agent solution comprises between about 5% w/w and about 25% w/w calcium ascorbate.

4. The method according to claims **1** to **3,** further comprising adding a food additive; and wherein said food additive is added on the surface of the food product prior to coating, is incorporated to the cross-linked polysaccharide layer, or is applied on a surface of the cross-linked polysaccharide layer once the food product is coated.

5. The method according to anyone of claims **1** to **4,** wherein the food product is selected from the group consisting of vegetables, fruits and meat products and wherein the food product is subjected to freezing.

6. The method according to anyone of claims **1** to **5,** wherein the food product is selected from the group consisting of vegetables, fruits and meat products and wherein the food product is subjected to cooking.

7. A cooked or frozen coated food product comprising a coated food product comprising an edible cross-linked polysaccharide layer at the surface of said food product,
wherein said coated food product consists of a thermal-treated food product which has been subjected to cooking or freezing after coating;
wherein said food product is selected from the group consisting of fruits, vegetables and meat; and
wherein said cross-linked polysaccharide layer consists of a polysaccharide solution comprising at least one polysaccharide selected from the group consisting of carrageenan, gellan, alginate, pectin, cellulose derivatives and starch derivatives, said polysaccharide solution being cross-linked with a water soluble cross-linking agent solution comprising at least 0.5% to 50% (w/w) calcium ascorbate.

8. The cooked or frozen coated food product according to claim **7,** wherein the polysaccharide solution comprises a polysaccharide selected from the group consisting of carrageenan, gellan, alginate, pectin, cellulose derivatives and starch derivatives.

9. The cooked or frozen coated food product according to claim **7** or claim **8,** further comprising a food additive on the surface of the food product.

## Patentansprüche

1. Verfahren zur Erhöhung der Beständigkeit eines Nahrungsmittelprodukts, das dem Kochen oder Einfrieren unterzogen wird, wobei das Verfahren die folgenden Schritte umfasst:
(a) Beschichten des Nahrungsmittelprodukts mit einer Polysaccharidlösung, umfassend mindestens ein Polysaccharid, ausgewählt aus der Gruppe, bestehend aus Carragen, Gellan, Alginat, Pektin, Zellulosederivaten und Stärkederivaten, um die Oberfläche des Nahrungsmittelprodukts zu bedecken; und
(b) Vernetzen des Polysaccharids mit einer Vernetzungsmittellösung, umfassend zwischen 0,5 % bis 50 % w/w Calciumascorbat, um eine vernetzte Polysaccharidschicht zu erhalten, die die Oberfläche des Nahrungsmittelprodukts abdeckt;
(c) Unterziehen des beschichteten Nahrungsmittelprodukts dem Kochen oder Einfrieren;
wobei die erhöhte Beständigkeit mindestens eines einer Konservierung der physischen Struktur der Zelle, einer Konservierung der physischen Integrität, einer Konservierung der Festigkeit und/oder einer Konservierung des Erscheinungsbildes des Nahrungsmittelprodukts ist.

2. Verfahren nach Anspruch 1, wobei die Vernetzungsmittellösung zwischen ungefähr 1 % w/w und ungefähr 35 % w/w Calciumascorbat umfasst.

3. Verfahren nach Anspruch 1, wobei die Vernetzungsmittellösung zwischen ungefähr 5 % w/w und ungefähr 25 % w/w Calciumascorbat umfasst.

4. Verfahren nach Anspruch 1 bis 3, weiter umfassend Zugeben eines Nahrungsmittelzusatzstoffs; und wobei der Nahrungsmittelzusatzstoff vor der Beschichtung auf die Oberfläche des Nahrungsmittelprodukts zugegeben wird, in die vernetzte Polysaccharidschicht integriert wird oder auf eine Oberfläche der vernetzten Polysaccharidschicht angewendet wird, nachdem das Nahrungsmittelprodukt beschichtet wurde.

5. Verfahren nach einem der Ansprüche 1 bis 4, wobei das Nahrungsmittelprodukt ausgewählt ist aus der Gruppe, bestehend aus Gemüse-, Obst- und Fleischprodukten, und wobei das Nahrungsmittelprodukt dem Einfrieren unterzogen wird.

6. Verfahren nach einem der Ansprüche 1 bis 5, wobei das Nahrungsmittelprodukt ausgewählt ist aus der Gruppe, bestehend aus Gemüse-, Obst- und Fleischprodukten, und wobei das Nahrungsmittelprodukt dem Kochen unterzogen wird.

7. Gekochtes oder eingefrorenes beschichtetes Nahrungsmittelprodukt, umfassend ein beschichtetes Nahrungsmittelprodukt, umfassend eine essbare vernetzte Polysaccharidschicht auf der Oberfläche des Nahrungsmittelprodukts,
wobei das beschichtete Nahrungsmittelprodukt aus einem thermisch behandelten Nahrungsmittelprodukt besteht, das nach dem Beschichten dem Kochen oder Einfrieren unterzogen wurde;
wobei das Nahrungsmittelprodukt ausgewählt ist aus der Gruppe, bestehend aus Obst, Gemüse und Fleisch; und
wobei die vernetzte Polysaccharidschicht aus einer Polysaccharidlösung besteht, umfassend mindestens ein Polysaccharid, ausgewählt aus der Gruppe, bestehend aus Carragen, Gellan, Alginat, Pektin, Zellulosederivaten und Stärkederivaten, wobei die Polysaccharidlösung mit einer wasserlöslichen Vernetzungsmittellösung vernetzt ist, umfassend mindestens 0,5 % bis 50 % (w/w) Calciumascorbat.

8. Gekochtes oder eingefrorenes beschichtetes Nahrungsmittelprodukt nach Anspruch 7, wobei die Polysaccharidlösung ein Polysaccharid umfasst, ausgewählt aus der Gruppe, bestehend aus Carragen, Gellan, Alginat, Pektin, Zellulosederivaten und Stärkederivaten.

9. Gekochtes oder eingefrorenes beschichtetes Nahrungsmittelprodukt nach Anspruch 7 oder Anspruch 8, weiter umfassend einen Lebensmittelzusatzstoff auf der Oberfläche des Nahrungsmittelprodukts.

## Revendications

1. Procédé pour augmenter la résistance d'un aliment soumis à une cuisson ou à une congélation, le procédé comprenant les étapes suivantes :
(a) on enrobe ledit aliment avec une solution de polysaccharide comprenant au moins un polysaccharide choisi dans le groupe qui consiste en les carraghénanes, la gomme gellane, l'alginate, la pectine, les dérivés de cellulose et les dérivés de l'amidon, pour recouvrir la surface dudit aliment ; et
(b) on réticule ledit polysaccharide avec une solution d'un agent de réticulation comprenant entre 0,5% et 50% (p/p) d'ascorbate de calcium, pour obtenir une couche de polysaccharide réticulé recouvrant la surface dudit aliment ;
(c) on soumet l'aliment enrobé à la cuisson ou à la congélation ;
où la résistance augmentée est au moins l'une de la conservation de la structure physique des cellules de l'aliment, la conservation de son intégrité physique, la conservation de sa fermeté et/ou la conservation de son apparence.

2. Procédé selon la revendication 1, **caractérisé en ce que** la solution de l'agent réticulant comprend entre environ 1% (p/p) et environ 35% (p/p) d'ascorbate de calcium.

3. Procédé selon la revendication 1, **caractérisé en ce que** la solution de l'agent réticulant comprend entre environ 5% (p/p) et environ 25% (p/p) d'ascorbate de calcium.

4. Procédé selon les revendications 1 à 3, **caractérisé en ce qu'**il comprend en outre l'étape selon laquelle on ajoute un additif alimentaire ; et où ledit additif alimentaire est ajouté sur la surface de l'aliment avant son enrobage, est incorporé dans la couche de polysaccharide réticulé, ou est appliqué sur la surface de la couche de polysaccharide réticulé après que l'aliment est enrobé.

5. Procédé selon l'une quelconque des revendications 1 à 4, **caractérisé en ce que** l'aliment est choisi parmi les légumes, les fruits et la viande et où l'aliment est soumis à une congélation.

6. Procédé selon l'une quelconque des revendications 1 à 5, **caractérisé en ce que** l'aliment est choisi parmi les légumes, les fruits et la viande et où l'aliment est soumis à une cuisson.

7. Aliment enrobé cuit ou congelé comprenant un aliment enrobé qui comprend, à sa surface, une couche de polysaccharide comestible réticulé,
**caractérisé en ce que** ledit aliment enrobé cuit consiste en un aliment thermiquement traité qui a été soumis à une cuisson ou une congélation après enrobage,
**caractérisé en ce que** ledit aliment enrobé est choisi dans le groupe consistant en les légumes, les fruits et la viande,
**caractérisé en ce que** la couche de polysaccharide réticulé consiste en une solution de polysaccharide comprenant au moins un polysaccharide choisi dans le groupe qui consiste en les carraghénanes, la gomme gellane, l'alginate, la pectine, les dérivés de cellulose et les dérivés de l'amidon, ladite solution de polysaccharide étant réticulée avec une solution d'un agent de réticulation soluble dans l'eau comprenant au moins 0,5% à 50% (p/p) d'ascorbate de calcium.

8. Aliment enrobé cuit ou congelé selon la revendication 7, **caractérisé en ce que** solution de polysaccharide comprend un polysaccharide choisi dans le groupe qui consiste en les carraghénanes, la gomme gellane, l'alginate, la pectine, les dérivés de cellulose et les dérivés de l'amidon.

9. Aliment enrobé cuit ou congelé selon la revendication 7 ou la revendication 8, **caractérisé en ce qu'**il comprend en outre un additif alimentaire sur sa surface.
